# EUROPEAN PATENT APPLICATION

(11) **EP 0 561 022 A1**
(43) Date of publication of application: **22.09.1993**
(21) Application number: 92104704.9
(22) Date of filing: 18.03.1992
(51) Int. Cl.: B65G 65/44

(54) **Procedure and device for supplying material**

(71) Applicant: APEPLAN KY, SF-18100 Heinola (FI)
(72) Inventor: Pettersson, Antti, SF-18100 Heinola (FI)
(74) Representative: Zipse + Habersack

(57) **Abstract**

The invention concerns a procedure for supplying material e.g. onto a belt conveyor, a screen, a crusher or a similar object by means of a carriage feeder comprising at least a hopper (1) and below it a carriage (2) which can be moved back and forth in a horizontal direction, the material being brought onto said carriage by means of various transport equipment. When the carriage (2) is moved in a substantially horizontal direction, an extension part (5) provided at the delivery end of the carriage is simultaneously moved in a substantially opposite direction.

## Description

The present invention relates to a procedure and a device for supplying material e.g. onto a belt conveyor, a screen, a crusher or a similar device by means of a carriage feeder comprising at least a hopper and below it a carriage which can be moved back and forth in a substantially horizontal direction, the material being supplied onto said carriage by means of various transport equipment.

There are previously known material supplying procedures in which carriage feeders are used for the purpose described above. According to a known procedure, the hopper of a carriage feeder is first filled with a material supplied e.g. from the tipping platform of a lorry. When the carriage moves on towards the delivery end, the material is moved along with the carriage. When the carriage is in its front position, an empty space is left between the rear edge of the material and the rear edge of the hopper, and this space is filled again from a lorry or equivalent. Thus, the material layer cannot move backwards during the return movement of the carriage but remains where it is. Consequently, the carriage moves away from under the material, and the material is delivered over the front edge of the carriage onto the object being fed. In a procedure like this, material supply only works during the periodic movements of the carriage.

A drawback with the procedure described above is that the material is unsteadily delivered from the feeder. Due to the periodic delivery, it is necessary to adapt the control of the object being fed so as to fit the feeding periods. This is generally difficult to implement and thus leads to complexity, frequent failures and extra costs.

The object of the procedure of the invention is to eliminate the drawbacks referred to above and to achieve a simple, reliable and low-cost material supplying system in which the material flows as steadily as possible to the object to be fed. The procedure of the invention is characterized by what is presented later on in the characterization part of the claims. The invention provides the advantage that the quality and capacity of the process are improved because of a smoother material flow.

The invention also relates to a device for implementing the above-mentioned procedure. The device consists of a hopper, a carriage moving back and forth below the hopper in a substantially horizontal plane, elements supporting the carriage and a power means producing the back-and-forth movement of the carriage. The device of the invention is characterized by what is presented subsequently in the characterization part of the claims. The device of the invention has the advantage of having a simple construction that ensures a steady material flow during feeding.

In the following, the invention is described by the aid of an example by referring to the attached drawings, in which
- Fig. 1: presents a carriage feeder as known in the art, in a simplified lateral view showing the hopper with its side wall removed,
- Fig. 2: presents the carriage feeder of the invention in its rear position, shown in a lateral view with the hopper side wall removed,
- Fig. 3: presents the carriage feeder of the invention in a situaton where the carriage is moving towards its front position, in a lateral view with the hopper side wall removed, and
- Fig. 4: presents the carriage feeder of the invention in its front position, in a lateral view with the hopper side wall removed.

The description of the invention is started from the structure of the device implementing the procedure. The carriage feeder comprises a hopper 1, into which the material to be supplied is dropped e.g. from the tipping platform of a lorry. Below the hopper there is a carriage 2 of a size substantially equal to the basal area of the hopper. The carriage surface receiving the material is usually a flat, even, horizontal surface which is generally provided with one or more wearing plates that are easy to replace with new ones when they are worn down. For certain purposes and materials, the surface may additionally be provided with suitable corrugations designed to engage the material. The carriage is provided with supporting wheels 3 on which the carriage rests. The number of supporting wheels depends on the size and structure of the carriage. Moreover, the carriage is provided with a power means 4, such as a hydraulic cylinder, placed below the carriage and immovably attached by one of its ends to a separate supporting structure and by the other end to the carriage. The power means 4 receives the required energy from a hydraulic aggregate, which is not shown in the drawings. The power means moves the carriage horizontally back and forth through a suitable distance. This carriage movement is called a stroke. When the carriage is moving forwards towards its delivery end, the movement is called a forward stroke, and when the carriage is moving backwards, the movement is called a return stroke. The carriage is provided with an extension part 5 mounted in an overlapping manner under the carriage at its delivery end. The underside of the carriage is provided with a suitable cut-out which receives almost the whole extension when it is in its inner position. In this position, the extension is almost completely under the carriage, only the bevelled front edge of the extension remaining outside the front edge of the carriage. The extension 5 moves horizontally in a suitable manner in relation to the carriage. The extension moves at a speed of about 50% of the velocity of the carriage, but in the opposite direction. The extension is powered by the same hydraulic aggregate as the actuator 4 of the carriage 2, the system being provided with a branching line connecting the pressure side of actuator 4 with the actuator of the extension. The adjustment of the velocity of the extension is implemented using a quantity control valve placed in the branching line referred to.

The mechanism used to move the extension may also consist of any other suitable actuating system, e.g. a separate hydraulic or pneumatic unit, a spindle motor, a linear motor, etc. In these cases, the speed adjustment system has to be constructed separately for each type of actuating mechanism. Another possible solution is a mechanically controlled lever mechanism actuated by the motions of the carriage, achieving speed adjustment by means of leverages.

The motion of the extension 5 is synchronized with that of the carriage 2 so that when the carriage is in its rear position, the extension is in its outer position at the delivery end of the carriage, i.e. protruding as far out as possible. In this situation, the total length of the carriage and extension in the horizontal direction is at a maximum. When the carriage moves towards its front position, the extension 5 moves simultaneously in the opposite direction towards the rear part of the carriage, i.e. towards its inner position. When the carriage is in its front position, the extension is in its inner position, and the total length of the carriage and the extension in the horizontal direction is at a minimum.

The extension 5 is supported on the carriage by longitudinal rails 8, which may also be provided with supporting wheels. The supporting rails 8 also act as guide rails. The front end of the extension 5 is so bevelled that the extension is longer at its bottom surface than at its top surface. The front end of the carriage itself has the same bevel angle, and when the extension is in its inner position, the front edges of the carriage and extension form a continuous inclined surface for the material delivered from the hopper.

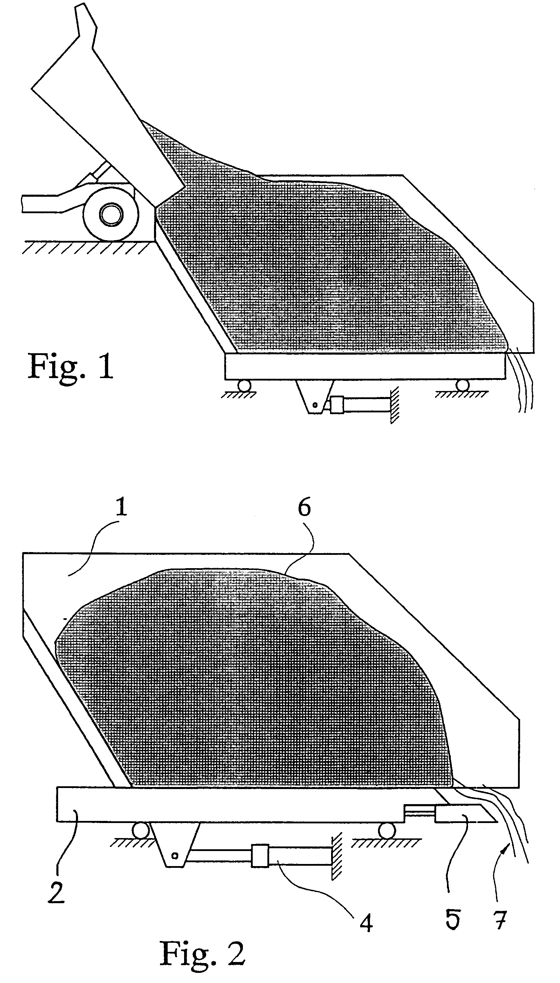

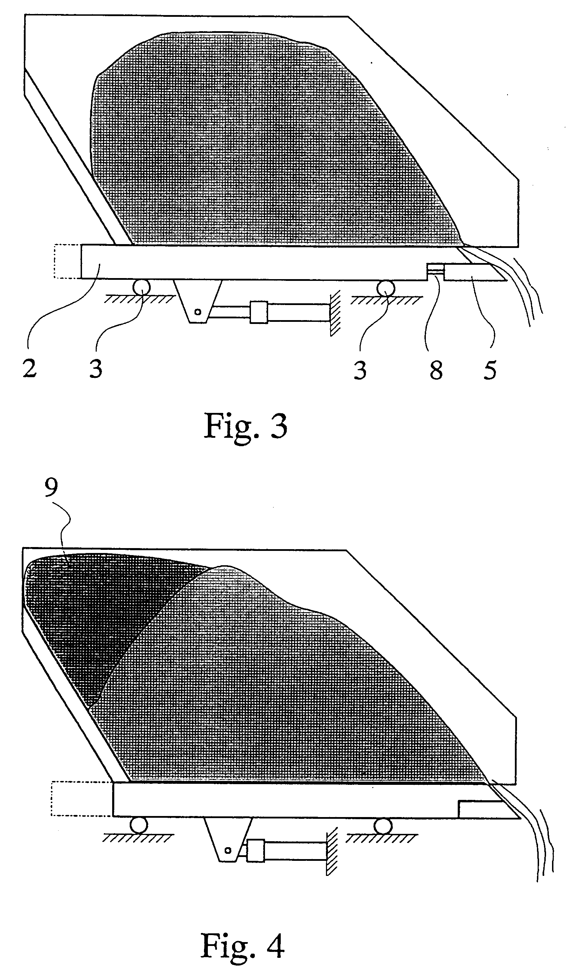

In the following, the procedure of the invention is briefly described. Suppose the equipment is initially in the position shown in Fig. 2, where the carriage 2 is in its rear position and the extension 5 in its outer position. The hopper contains a quantity of the material 6 being supplied. The carriage 2 is now moved forwards, i.e. to the right in the figure, thus moving the heap of material 6 along with it. As the extension 5 moves simultaneously inwards at half the velocity of the carriage, the material may fall down over the front edge of the carriage and extension to the object being fed. The falling material is identified by reference number 7. During the forward stroke, the extension helps the material fall down. The carriage is moved to its extreme front position, in which situation the extension is in its innermost position as shown in Fig. 4. An amount of fresh material 9 is now supplied into the hopper and it fills the empty space which has appeared between the old material heap 6 and the rear wall of the hopper 1. Next, a return stroke is performed, the carriage being moved back towards its rear position. Simultaneously, the extension is moved in the opposite direction, i.e. towards the front end, at half the velocity of the carriage. The extension now controls the falling material flow 7 and prevents excessive amounts of the material from falling down at the same time. This procedure allows a material flow as steady as possible to be achieved between the forward stroke and the return stroke.

It is obvious to a person skilled in the art that the invention is not restricted to the example described above, but that it may instead be varied within the scope of the claims presented below. Thus, for example, the extension 5, which is normally provided with a continuous wearing plate attached to its top surface, may be replaced with a structure whose front edge as seen from above is provided with alternate gaps opening outwards and corresponding finger-like protrusions, so that the front edge of the extension resembles e.g. the front edge of the shovel of a tractor loader, which is provided with wear resistant claws. Finer material can flow down through the gaps between the claws, i.e. the finger-like protrusions.

## Claims

1. Procedure for supplying material e.g. onto a belt conveyor, a screen, a crusher or a similar receiving object by means of a carriage feeder comprising at least a hopper (1) and below it a carriage (2) which can be moved back and forth in a horizontal direction, the material being brought onto said carriage by means of various transport equipment, **characterized** in that, when the carriage (2) is moved in a substantially horizontal direction, an extension part (5) provided at the delivery end of the carriage is simultaneously moved in a substantially opposite direction.

2. Procedure for supplying material according to claim 1, **characterized** in that, when the carriage (2) is moved towards its delivery end, the extension part (5) is simultaneously moved towards the rear end of the carriage, and correspondingly, when the carriage is moved towards the rear edge of the hopper (1), the extension (5) is simultaneously moved towards the delivery end of the carriage, the speed of motion of the extension being substantially lower than that of the carriage.

3. Device for supplying material, implementing the procedure of claim 1 and comprising a hopper (1), a carriage (2) moving below the hopper in a substantially horizontal direction, carriage supporting elements (3) and a power means (4) which generates the back-and-forth motion of the carriage, **characterized** in that the carriage is provided with an extension part (5) which is placed at the delivery end of the carriage and which can be moved in a substantially horizontal direction.

4. Device according to claim 3 for supplying material, **characterized** in that the extension part (5) is mounted at the delivery end of the carriage (2), placed under it in an overlapping manner, and that said extension part moves simultaneously with the carriage but in the opposite direction.

5. Device according to claim 3 or 4 for supplying material, **characterized** in that the motion of the extension (5) is generated by the same power unit that produces the motion of the carriage actuator (4), and that the power transmission link to the extension is provided with a regulating element permitting the speed of motion of the extension to be adjusted.

6. Device according to claim 3, 4 or 5 for supplying material, **characterized** in that the speed of motion of the extension (5) has been adjusted to a level lower than the speed of the carriage (2).
